# EUROPEAN PATENT APPLICATION

(11) **EP 4 596 233 A1**
(43) Date of publication of application: **06.08.2025**
(21) Application number: 24382098.2
(22) Date of filing: 31.01.2024
(51) Int. Cl.: B32B 7/12, B32B 15/085, B32B 15/20, B32B 27/08, B32B 27/10, B32B 27/30, B32B 27/32, B32B 27/34, B32B 27/40, C08L 23/12, C08L 51/06, C09J 151/06

(54) **TIE LAYERS COMPRISING PROPYLENE-BASED POLYMERS, FUNCTIONALIZED PROPYLENE, AND MODIFIERS AND COATED SUBSTRATES INCORPORATING SAME**

(71) Applicant: Dow Global Technologies LLC, Midland, MI 48674 (US)
(72) Inventor: DONG, Yifan, Lake Jackson, 77566 (US); HILL, Martin, 43006 Tarragona (ES); MARKS, Scott B., Wilmington, 19803 (US); JIN, Lin, Lake Jackson, 77566 (US); LEE, Jong-Young, Lake Jackson, 77566 (US); YE, Dan, Lake Jackson, 77566 (US); VERVOORT, Sylvie, 4542 NM Hoek (NL); MAKSIMOVIC, Ksenija, 43006 Tarragona (ES)
(74) Representative: Elzaburu S.L.P.

(57) **Abstract**

A coated substrate including a polar layer, at least one polypropylene layer, and at least one tie layer that adheres the polypropylene layer to the polar layer, wherein the tie layer includes at least one propylene-based polymer having a melt flow rate (MFR) (230 °C/ 2.16 kg) of 1.0 to 20.0 dg/min and a melting temperature greater than 130 °C, functionalized polypropylene having an MFR (160 °C/ 0.325 kg) of 5.0 to 50.0 dg/min determined by ASTM D1238, ISO 1133), wherein the functionalized polypropylene comprises a polypropylene grafted with ethylenically unsubstituted dicarboxylic acid; and a modifier comprising at least one of an olefin block copolymer, an ethylene acid copolymer, an ethylene alkyl acrylate copolymer, and ethylene propylene diene terpolymer.

## Description

### TECHNICAL FIELD

The present disclosure generally relates to tie layers effective at higher temperatures and specifically relate to coated substrates that utilizes these tie layers to maintain adhesion between a polypropylene layer and a polar layer at higher temperatures.

### BACKGROUND

Specialty coated substrates serve multiple applications and market segments across the food, specialty packaging, infrastructure, and transportation industries. These coated substrates may include tie layers to help the coating adhere to the substrate. The coated substrate may be aluminum foil, metalized films, or polar substrates further laminated with paperboard. The tie layers strongly adhere to the coating and the substrate on each side of the tie layer, thus helping bind together those layers in the coated substrate.

However, conventional tie layers often unable to withstand at high temperatures (i.e., temperatures of at least 100 °C), which may result in poor adhesion and delamination of the coated substrate. Therefore, a need exists for improved tie layers that resist delamination at high temperatures.

### SUMMARY

Embodiments of the present disclosure address these needs by utilizing a tie layer comprising propylene-based polymers, functionalized propylene, and at least one modifier that delivers superior adhesion enhancement at higher temperatures to coated substrates. The propylene-based polymers, functionalized propylene, and at least one modifier will not only deliver enhanced solid handling during pellet transportation, but also provide improved heat resistance for high-temperature applications such as retort packaging or battery packaging. Some embodiments of the present disclosure may be suitable for high temperature applications of greater than or equal to 130 °C.

In one embodiment, a coated substrate includes a polar layer, at least one polypropylene layer, and at least one tie layer that adheres the polypropylene layer to the polar layer, wherein the tie layer includes at least one propylene-based polymer having a melt flow rate (MFR) (230 °C/ 2.16 kg) of 1.0 to 20.0 dg/min at conditions and a melting temperature greater than 130 °C, functionalized polypropylene having an MFR (160 °C/ 0.325 kg) of 5.0 to 50.0 dg/min, wherein the functionalized polypropylene comprises a polypropylene grafted with ethylenically unsubstituted dicarboxylic acid; and a modifier comprising at least one of an olefin block copolymer, an ethylene acid copolymer, an ethylene alkyl acrylate copolymer, and ethylene propylene diene terpolymer.

According to one or more embodiments of the present disclosure, an article may be produced from the above coated substrates.

According to one or more embodiments of the present disclosure, a tie layer formulation may include at least one propylene-based polymer having an MFR (230 °C/ 2.16 kg) of 1.0 to 20.0 dg/min and a melting temperature greater than 130 °C, functionalized polypropylene having an MFR (160 °C/ 0.325 kg) of 5.0 to 50.0 dg/min , wherein the functionalized polypropylene comprises a polypropylene grafted with ethylenically unsubstituted dicarboxylic acid; and a modifier comprising at least one of an olefin block copolymer, an ethylene acid copolymer, an ethylene alkyl acrylate copolymer, and ethylene propylene diene terpolymer.

Additional features and advantages will be set forth in the detailed description that follows and, in part, will be readily apparent to those skilled in the art from that description or recognized by practicing the embodiments described herein, including the detailed description which follows in addition to the claims.

It is to be understood that both the foregoing general description and the following detailed description describe various embodiments and are intended to provide an overview or framework for understanding the nature and character of the claimed subject matter.

### DETAILED DESCRIPTION

### DEFINITIONS

As used in this disclosure, the term "polymer" may refer to a polymeric compound prepared by polymerizing monomers, whether of the same or a different type. The generic term polymer thus embraces the term "homopolymer," usually employed to refer to polymers prepared from only one type of monomer as well as "copolymer," which refers to polymers prepared from two or more different monomers. The term "interpolymer," as used herein, refers to a polymer prepared by the polymerization of at least two different types of monomers. The generic term interpolymer thus includes copolymers, and polymers prepared from more than two different types of monomers, such as terpolymers.

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend. Such blends can be prepared as dry blends, formed *in situ* (e.g., in a reactor), melt blends, or using other techniques known to those of skill in the art.

As used in this disclosure, the term "polyethylene" or "ethylene-based polymer" may refer to polymers comprising greater than 50% by mole of units which have been derived from ethylene monomer. This includes polyethylene homopolymers or copolymers (meaning units derived from two or more comonomers). Common forms of ethylene-based polymer known in the art include low density polyethylene (LDPE); linear low density polyethylene (LLDPE); ultra low density polyethylene (ULDPE); very low density polyethylene (VLDPE); single-site catalyzed linear low density polyethylene, including both linear and substantially linear low density resins (m-LLDPE); medium density polyethylene (MDPE); and high density polyethylene (HDPE).

As used in this disclosure, the term "polypropylene" or "polypropylene-based polymer" may refer to polymers comprising greater than 50% by mole of units, which have been derived from propylene monomer. This includes polypropylene homopolymers or copolymers (meaning units derived from two or more comonomers).

The term "functionalized polypropylene" means a polypropylene incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups can be grafted to a propylene homopolymer or an propylene/α-olefin interpolymer, or it may be copolymerized with polypropylene and an optional additional comonomer to form an interpolymer of polypropylene, the functional comonomer and optionally other comonomer(s).

"Ethylene acid copolymer" is a polymerized reaction product of ethylene and one or more unsaturated carboxylic acids.

The term "LLDPE", includes both resin made using the traditional Ziegler-Natta catalyst systems and chromium-based catalyst systems as well as single-site catalysts, including, but not limited to, bis-metallocene catalysts (sometimes referred to as "m-LLDPE"), constrained geometry catalysts (CGC), and molecular catalysts. Resins include linear, substantially linear, or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art.

Low density polyethylene (LDPE) refers polyethylene having a density from about 0.910 to 0.940 g/cm³ produced in radical polymerization reactions under high pressure such that branching occurs and non-linear polyethylene is formed.

High density polyethylene (HDPE) refers to polyethylene having a density from about 0.940 usually to about 0.970 g/cm³.

The term "olefin block copolymer" refers to a copolymerized polymer of ethylene or propylene with α-olefins, wherein the copolymer comprises a plurality of repeating unit blocks or segments that are distinguishable from one another as they differ in at least one of their physical or chemical properties; for example, the content (mole fraction) of the repeating units derived from ethylene (or propylene) and the α-olefins, respectively, a degree of crystallization, a density, or a melting temperature.

### EMBODIMENTS

Reference will now be made in detail to embodiments of coated substrate including a polar layer, at least one polypropylene layer, and at least one tie layer that adheres the polypropylene layer to the polar layer, wherein the tie layer includes at least one propylene-based polymer having an MFR (230 °C/ 2.16 kg) of 1.0 to 20.0 dg/min and a melting temperature greater than 130 °C, functionalized polypropylene having an MFR (160 °C/ 0.325 kg) of 5.0 to 50.0 dg/min (160 °C/ 0.325 kg), wherein the functionalized polypropylene comprises a polypropylene grafted with ethylenically unsubstituted dicarboxylic acid; and a modifier comprising at least one of an olefin block copolymer, an ethylene acid copolymer, an ethylene alkyl acrylate copolymer, and ethylene propylene diene terpolymer.

Various compositions are considered suitable for the propylene-based polymer. For example the propylene-based polymer may be a single type of propylene-based polymer, or a blend of propylene-based polymers. The propylene-based polymers may be random copolymers or homopolymers. The propylene-based polymer may have a melting temperature of at least 130 °C, such as at least 135 °C or at least 140 °C. Without being bound by theory, it is believed that using propylene-based polymers with a melting temperature of greater than 130 °C may improve adhesion performance and improved delamination resistance of the tie layer at high temperatures (i.e. temperatures of at least 100 °C). In various embodiments, the polypropylene may include a blend of polypropylene resins.

In embodiments, the propylene-based polymer may have an MFR (230 °C/ 2.16 kg) of from 1.0 to 20.0 dg/min . In embodiments, the propylene-based polymer may have an MFR (230 °C/ 2.16 kg) from 1.0 to 20.0 dg/min, from 1.0 to 15.0 dg/min, from 1.0 to 12.0 dg/min, from 1.0 to 10.0 dg/min, from 1.5 to 20.0 dg/min, from 1.0 to 15.0 dg/min, from 1.0 to 12.0 dg/min, or from 1.0 to 10.0 dg/min.

In one or more embodiments, the tie layer may include from 40 weight percent (wt.%) to 90 wt.% propylene-based polymer. In some embodiments, the tie layer may include from 40 to 90 wt.%, from 45 to 90 wt.%, from 50 to 90 wt.%, from 55 to 90 wt.%, from 60 to 90 wt.%, from 65 to 90 wt.%, from 40 to 85 wt.%, from 45 to 85 wt.%, from 50 to 85 wt.%, from 55 to 85 wt.%, from 60 to 85 wt.%, from 65 to 85 wt.%, from 40 to 80 wt.%, from 45 to 80 wt.%, from 50 to 80 wt.%, from 55 to 80 wt.%, from 60 to 80 wt.%, from 65 to 80 wt.%, from 40 to 75 wt.%, from 45 to 75 wt.%, from 50 to 75 wt.%, from 55 to 75 wt.%, from 60 to 75 wt.%, from 65 to 75 wt.%, from 40 to 70 wt.%, from 45 to 70 wt.%, from 50 to 70 wt.%, from 55 to 70 wt.%, from 60 to 70 wt.%, or from 65 to 70 wt.% propylene-based polymer.

Various compositions are considered suitable for the functionalized polypropylene. The functionalized polypropylene may be a polyethylene grafted with ethylenically unsubstituted dicarboxylic acid or derivative thereof. The ethylenically unsubstituted dicarboxylic acid or derivative thereof may be selected from maleic anhydride, itaconic anhydride, maleic acid diesters, fumaric diesters, maleic acid monoesters or fumaric acid monoesters, esters of C₁ to C₄ alcohols, maleic acid, itaconic acid, fumaric acid, or mixtures thereof.

The functionalized polypropylene may have an MFR (160 °C/ 0.325 kg) of from 5.0 to 50.0 dg/min . In embodiments, the functionalized polypropylene may have an MFR (160 °C/ 0.325 kg) of from 5.0 to 50.0 g/10 mins, from 10.0 to 50.0 dg/min, 5.0 to 45.0 dg/min, from 10.0 to 45.0 dg/min, 5.0 to 40.0 dg/min, from 10.0 to 40.0 dg/min, 5.0 to 35.0 dg/min, from 10.0 to 35.0 dg/min, 5.0 to 30.0 dg/min, from 10.0 to 30.0 dg/min, 5.0 to 25.0 dg/min, from 10.0 to 25.0 dg/min, 5.0 to 20.0 dg/min, from 10.0 to 20.0 dg/min, 5.0 to 15.0 dg/min, or from 10.0 to 15.0 dg/min.

In some embodiments, the functionalized polypropylene may be grafted with 0.1 to 3.0 wt.%, such as from 0.1 to 3.0 wt.%, from 0.5 to 3.0 wt.%, from 0.8 to 3.0 wt.%, from 0.1 to 2.5 wt.%, from 0.5 to 2.5 wt.%, 0.8 to 2.5 wt.%, from 0.1 to 2.0 wt.%, from 0.5 to 2.0 wt.%, or from 0.8 to 2.0 wt.% ethylenically unsubstituted dicarboxylic acid or derivative thereof, for example, maleic anhydride.

In one or more embodiments, the tie layer may include from 5 wt.% to 30 wt.% functionalized polypropylene. In one or more embodiments, the tie layer may include from 5 wt.% to 30 wt.%, from 8 wt.% to 30 wt.%, from 10 wt.% to 30 wt.%, from 12 wt.% to 30 wt.%, from 5 wt.% to 25 wt.%, from 8 wt.% to 25 wt.%, from 10 wt.% to 25 wt.%, from 12 wt.% to 25 wt.%, from 5 wt.% to 20 wt.%, from 8 wt.% to 20 wt.%, from 10 wt.% to 20 wt.%, or from 12 wt.% to 20 wt.% functionalized polypropylene.

The tie layer may further include a modifier including at least one of an olefin block copolymer, an ethylene acid copolymer, an ethylene alkyl acrylate copolymer, and ethylene propylene diene terpolymer.

In one or more embodiments, the tie layer may include from 5 wt.% to 30 wt.% modifier. In one or more embodiments, the tie layer may include from 5 wt.% to 30 wt.%, from 8 wt.% to 30 wt.%, from 10 wt.% to 30 wt.%, from 12 wt.% to 30 wt.%, from 5 wt.% to 25 wt.%, from 8 wt.% to 25 wt.%, from 10 wt.% to 25 wt.%, from 12 wt.% to 25 wt.%, from 5 wt.% to 20 wt.%, from 8 wt.% to 20 wt.%, from 10 wt.% to 20 wt.%, or from 12 wt.% to 20 wt.% modifier.

Various compositions are considered suitable for the olefin block copolymer. In one or more embodiments, the olefin block copolymer may be an ethylene copolymer-based elastomer with a C₃ to C₂₀ hydrocarbon comonomer such as 1-butene, 1-hexene, or 1-octene. For example, the olefin block copolymer may include an ethylene/C₃-C₁₂-alpha-olefin copolymer. Without being bound by theory, it is believed that using an ethylene based polymer, a functionalized polyethylene, and an ethylene copolymer-based block copolymer may improve adhesion at higher temperatures compared to tie layers that include combinations of ethylene based polymers and propylene based polymers.

The olefin block copolymer may have an MFR (190 °C/ 2.16 kg) of from 0.1 to 5.0 dg/min. The olefin block copolymer may have an MFR (190 °C/ 2.16 kg) of from 0.1 to 5.0 dg/min, from 0.1 to 4.0 dg/min, from 0.1 to 3.0 dg/min, from 0.1 to 2.0 dg/min, from 0.1 to 1.5 dg/min, from 0.5 to 5.0 dg/min, from 0.5 to 4.0 dg/min, from 0.5 to 3.0 dg/min, from 0.5 to 2.0 dg/min, or from 0.5 to 1.5 dg/min. The olefin block copolymer may have a melting temperature of at least 115 °C, at least 116 °C, at least 117 °C, or at least 118 °C. Without being bound by theory, it is believed that using olefin block copolymers with a melting temperature of greater than 115 °C may improve adhesion performance and improved delamination resistance of the tie layer at temperatures greater than or equal to 100 °C, greater than or equal to 105 °C, greater than or equal to 110 °C, greater than or equal to 115 °C, greater than or equal to 120 °C, greater than or equal to 125 °C, or greater than or equal to 130 °C..

The olefin block copolymer may have a density of from 0.860 to 0.900 g/cm³, such as from 0.860 to 0.900 g/cm³, from 0.860 to 0.895 g/cm³, from 0.860 to 0.890 g/cm³, from 0.860 to 0.885 g/cm³, from 0.860 to 0.880 g/cm³, 0.865 to 0.900 g/cm³, such as from 0.865 to 0.900 g/cm³, from 0.865 to 0.895 g/cm³, from 0.865 to 0.890 g/cm³, from 0.865 to 0.885 g/cm³, or from 0.865 to 0.880 g/cm³.

The ethylene acid copolymer includes or is derived from 60 weight percent (wt.%) to 99 wt.% ethylene monomer. In some examples, the polymerized reaction product includes from 60 wt.% to 99 wt.% ethylene, from 60 wt.% to 95 wt.% ethylene, from 60 wt.% to 90 wt.% ethylene, 70 wt.% to 99 wt.% ethylene, from 70 wt.% to 95 wt.% ethylene, from 70 wt.% to 90 wt.% ethylene, 80 wt.% to 99 wt.% ethylene, from 80 wt.% to 95 wt.% ethylene, or from 80 wt.% to 90 wt.% ethylene.

The ethylene acid copolymer may include from 5 to 20 wt.% carboxylic acid monomers. The carboxylic acid monomers may be, for example, acrylic acid, methacrylic acid, or combinations thereof. In some examples, ethylene acid copolymer includes from 5 to 20 wt.% carboxylic acid monomers, from 6 to 20 wt.% carboxylic acid monomers, from 7 to 20 wt.% carboxylic acid monomers, from 8 to 20 wt.% carboxylic acid monomers, from 5 to 18 wt.% carboxylic acid monomers, from 6 to 18 wt.% carboxylic acid monomers, from 7 to 18 wt.% carboxylic acid monomers, from 8 to 18 wt.% carboxylic acid monomers, from 5 to 15 wt.% carboxylic acid monomers, from 6 to 15 wt.% carboxylic acid monomers, from 7 to 15 wt.% carboxylic acid monomers, from 8 to 15 wt.% carboxylic acid monomers, from 5 to 12 wt.% carboxylic acid monomers, from 6 to 12 wt.% carboxylic acid monomers, from 7 to 12 wt.% carboxylic acid monomers, from 8 to 12 wt.% carboxylic acid monomers, from 5 to 10 wt.% carboxylic acid monomers, from 6 to 10 wt.% carboxylic acid monomers, from 7 to 10 wt.% carboxylic acid monomers, or from 8 to 10 wt.% carboxylic acid monomers.

The ethylene acid copolymer can be prepared by standard free-radical copolymerization methods, using high pressure, operating in a continuous manner. Monomers are fed into the reaction mixture in a proportion which relates to the monomer's activity, and the amount desired to be incorporated. In this way, uniform, near-random distribution of monomer units along the chain is achieved. Unreacted monomers may be recycled. The ethylene acid copolymer may be polymerized according to processes disclosed in U.S. Pat. Nos. 3,404,134; 5,028,674; 6,500,888; and 6,518,365. In some embodiments, blends of two or more ethylene acid copolymers may be used, provided that the aggregate components and properties of the blend fall within the limits described above for the ethylene acid copolymers.

Various compositions are considered suitable for the ethylene alkyl acrylate copolymer. In one or more embodiments, the ethylene alkyl acrylate copolymer includes from 5 to 25 wt.%, from 7 to 25 wt.%, from 10 to 25 wt.%, from 12 to 25 wt.%, from 5 to 22 wt.%, from 7 to 22 wt.%, from 10 to 22 wt.%, from 12 to 22 wt.%, from 5 to 20 wt.%, from 7 to 20 wt.%, from 10 to 20 wt.%, from 12 to 20 wt.%, from 5 to 18 wt.%, from 7 to 18 wt.%, from 10 to 18 wt.%, from 12 to 18 wt.%, from 5 to 15 wt.%, from 7 to 15 wt.%, from 10 to 15 wt.%, or from 12 to 15 wt.% of the acrylate comonomer. In some embodiments, the ethylene alkyl acrylate copolymer may include ethylene methyl acrylate copolymers, ethylene ethyl acrylate copolymers, ethylene propyl acrylate copolymers, or ethylene butyl acrylate copolymers.

In one or more embodiments, the modifier may include both an ethylene acid copolymer and an ethylene alkyl acrylate copolymer. Without being bound by theory, a modifier including a blend of ethylene acid copolymer and ethylene alkyl acrylate copolymer is believed to improve the adhesive properties of the tie layer, especially when the ethylene acid copolymer has an acid content of from 5 to 20 wt.%.

In one or more embodiments, the ethylene propylene diene terpolymers may have a density of from 0.850 to 0.890 g/cm³, from 0.860 to 0.890 g/cm³, from 0.870 to 0.890 g/cm³, from 0.875 to 0.890 g/cm³, from 0.850 to 0.885 g/cm³, from 0.860 to 0.885 g/cm³, from 0.870 to 0.885 g/cm³, or from 0.875 to 0.885 g/cm³.

In one or more embodiments, the ethylene propylene diene terpolymers may have an ethylene content of from 50 to 90 wt.%, from 55 to 90 wt.%, from 60 to 90 wt.%, from 65 to 90 wt.%, from 50 to 85 wt.%, from 55 to 85 wt.%, from 60 to 85 wt.%, from 65 to 85 wt.%, from 50 to 80 wt.%, from 55 to 80 wt.%, 60 to 80 wt.%, 65 to 80 wt.%, from 50 to 75 wt.%, from 55 to 75 wt.%, from 60 to 75 wt.%, or from 65 to 75 wt.%.

In one or more embodiments, the ethylene propylene diene terpolymers may have an ethylidene norbornene (ENB) content of from 0.1 to 5.0 wt.%, from 0.1 to 4.0 wt.%, from 0.1 to 3.0 wt.%, from 0.1 to 2.0 wt.% from 0.1 to 1.0 wt.%, from 0.2 to 1.0 wt.%, from 0.3 to 1.0 wt.%, from 0.4 to 1.0 wt.%, from 0.1 to 0.9 wt.%, from 0.2 to 0.9 wt.%, 0.3 to 0.9 wt.%, from 0.4 to 0.9 wt.%, from 0.1 to 0.8 wt.%, from 0.2 to 0.8 wt.%, from 0.3 to 0.8 wt.%, from 0.4 to 0.8 wt.%, from 0.1 to 0.7 wt.%, from 0.2 to 0.7 wt.%, from 0.3 to 0.7 wt.%, from 0.4 to 0.7 wt.%, from 0.1 to 0.6 wt.%, from 0.2 to 0.6 wt.%, from 0.3 to 0.6 wt.%, or from 0.4 to 0.6 wt.%.

In one or more embodiments, the ethylene propylene diene terpolymers may have a propylene content of from 10 to 50 wt.%, from 15 to 50 wt.%, from 20 to 50 wt.%, from 25 to 50 wt.%, from 10 to 50 wt.%, from 15 to 50 wt.%, from 20 to 50 wt.%, from 25 to 50 wt.%, from 10 to 45 wt.%, from 15 to 45 wt.%, from 20 to 45 wt.%, from 25 to 45 wt.%, from 10 to 45 wt.%, from 15 to 45 wt.%, from 20 to 45 wt.%, from 25 to 45 wt.%, from 10 to 40 wt.%, from 15 to 40 wt.%, from 20 to 40 wt.%, from 25 to 40 wt.%, from 10 to 40 wt.%, from 15 to 40 wt.%, from 20 to 40 wt.%, from 25 to 40 wt.%, from 10 to 35 wt.%, from 15 to 35 wt.%, from 20 to 35 wt.%, from 25 to 35 wt.%, from 10 to 35 wt.%, from 15 to 35 wt.%, from 20 to 35 wt.%, or from 25 to 35 wt.%.

In one or more embodiments, the ethylene propylene diene terpolymers may have a Mooney viscosity (ML 1+4, 125 °C) greater than 10 Mooney Units (MU). The ethylene propylene diene terpolymers may have a Mooney viscosity (ML 1+4, 125 °C) of from 10 to 50 MU, from 15 to 50 MU, from 18 to 50 MU, from 10 to 45 MU, from 15 to 45 MU, from 18 to 45 MU, from 10 to 40 MU, from 15 to 40 MU, from 18 to 40 MU, from 10 to 35 MU, from 15 to 35 MU, from 18 to 35 MU, from 10 to 30 MU, from 15 to 30 MU, from 18 to 30 MU, from 10 to 25 MU, from 15 to 25 MU, from 18 to 25 MU, from 10 to 22 MU, from 15 to 22 MU, or from 18 to 22 MU.

In one or more embodiments, the tie layer may have an anhydride content of from 0.08 to 0.35 wt.%, such as from 0.08 to 0.35 wt.%, from 0.10 to 0.35 wt.%, from 0.08 to 0.30 wt.%, from 0.10 to 0.30 wt.%, from 0.08 to 0.25 wt.%, or from 0.10 to 0.25 wt.%, based on the total weight of the tie layer.

In various embodiments, the polar layer may comprise aluminum foil, metallized film, paperboard, polyamide, ethylene vinyl alcohol (EVOH), polyvinyl alcohol (PVOH), thermoplastic starch (TPS), thermoplastic polyurethane (TPU), or combinations thereof.

### ADDITIVES

It should be understood that any of the foregoing layers can further comprise one or more additives as known to those of skill in the art such as, for example, antioxidants, rheology modifiers, moisture absorbents, ultraviolet light stabilizers, thermal stabilizers, slip agents, antiblock agents, antistatic agents, pigments or colorants, processing aids, crosslinking catalysts, flame retardants, fillers and foaming agents. The layer may contain any amounts of such additives, such as from 0 wt. % to 10 wt. %, from 0 wt. % to 5 wt. %, from 0 wt. % to 1 wt. %, from 0 wt. % to 0.1 wt. %, from 0 wt. % to 0.001 wt. %, or any subset thereof, based on the weight of the layer.

### ARTICLES

In various embodiments, the coated substrate may be an extrusion coated substrate. The multilayer structure may be constructed from two or more layers by any coextrusion technique and using any blown or cast extrusion equipment known in the art. For example, coated substrate may be prepared using multiple steps of extrusion coating, extrusion lamination, co-extrusion coating and/ or co-extrusion lamination.

In one or more embodiments, an article may be produced from the coated substrate described herein. The articles may include packaging, such as retort packaging, laminate, or paperboard.

### TEST METHODS

Melt flow rate was measured according to ASTM D1238 and/or ISO 1133, under selected conditions of temperature (T) and load (L), noted as MFR(T(°C)/L(kg)) and expressed in units of gram per 10 minutes or simplified to dg/min. Conditions used included (190 °C/2.16 kg), (230 °C/2.16 kg) and (160 °C/0.325 kg).

The melting temperature (Tm) of different polymers was measured by differential scanning calorimetry (DSC) with a heat/ cool/ heat method, where the reported Tm was the peak temperature determined from the second heat based on ASTM D3418, the entirety of which is hereby incorporated by reference.

Density measurements were performed on test specimen from compression-molded plaques prepared according to ASTM D4703. Measurements were made within one hour of sample pressing, according to ASTM D792 Method B within one hour of sample pressing.

Peel strength measurements were measured using a Peel Test. First, the tie resin was extrusion-coated on an aluminum sheet via a co-extrusion coating process. The overall structure (1 mil PP - 0.5 mil tie resin) was applied to the aluminum side and has a thickness of 1.5 mil. Masking tape was placed on a portion of the aluminum sheet to generate peel tabs. Since there is weak adhesion between the masking tape and coating, the masking tape can be peeled-off the coating. The sheet to be tested was cut into 25 mm wide strips along the machine direction with the longer side oriented along the machine direction. The coating was peeled off from the aluminum sheet (starting from the location with the masking tape), and then the two jaws of the tensile test machine griped the ends of the peeled-off coating and aluminum sheet. Then the whole sample was slowly pulled at 1 in/min to remove the slack. The sample was then tested at a speed of 25 cm/min and the average load over 75 mm (from 25 mm to 100 mm) was recorded.

### EXAMPLES

The following Examples are offered by way of illustration and are presented in a manner such that one skilled in the art should recognize are not meant to be limiting to the present disclosure as a whole or to the appended claims. The following compositions are listed in Table 1 were used in the Examples below.

**Table 1: Chemical Compositions**

| **Ingredient Type** | **Product Name** | **MFR(T(°C)/L(kg)) (dg/min)** | **Notes** | **Supplier** |
|---|---|---|---|---|
| Random Copolymer Polypropylene | Braskem DS6D21 | MFR (230/ 2.16) = = 8.0 | Tm = 142 °C | Braskem |
| Random Copolymer Polypropylene | Braskem 6D20 | MFR (230/ 2.16) = 1.9 | Tm = 145 °C | Braskem |
| Maleic anhydride grafted random copolymer polypropylene (1.1% MAh) | FP-1 | MFR (160/ 0.325) = 12.5 | | |
| Maleic anhydride grafted linear low-density polyethylene (1.15% MAh) | FP-2 | MFR(190/ 2.16) = 3 | Density = 0.912 g/cm³ | |
| Acid terpolymer (10 wt% MAA, with iBA) | FP-3 | MFR(190/ 2.16) = 10 | | |
| Acid copolymer (4 wt% MAA) | NUCREL^{™} 0411HS | MFR(190/ 2.16) = 11 | | Dow Chemical Company, Midland, MI |
| Ethylene methyl acrylate copolymer (13% MA) | ELVALOY AC^{™} 1913LG | MFR(190/ 2.16) = 9 | | Dow Chemical Company, Midland, MI |
| Acid copolymer (8.7 wt% MAA) | NUCREL^{™} 0910 | MFR(190/ 2.16) = 10 | | Dow Chemical Company, Midland, MI |
| Acid copolymer (9.5 wt% AA) | NUCREL^{™} 3990 | MFR(190/ 2.16) = 10 | | Dow Chemical Company, Midland, MI |
| Olefin block copolymer | INFUSE^{™} 9500 | MFR(190/ 2.16) = 5 | Density = 0.877 g/cm³ | Dow Chemical Company, Midland, MI |
| Ethylene propylene diene terpolymer | NORDEL^{™} IP 3720P | Mooney Viscosity: 20 ML 1+4(125 °C) | Mooney Viscosity (ML 1+4, 125 °C) = 20 MU | Dow Chemical Company, Midland, MI |
| Low density polyethylene | DOW^{™} LDPE 5004I | MFR(190/ 2.16) = 4.2 | Density = 0.924 g/cm³ | Dow Chemical Company, Midland, MI |

FP-1 was prepared according to Example 1 of U.S. Patent No 6228948. The entirety of U.S. Patent No 6228948 is hereby incorporated by reference.

FP-2 was prepared according to Example 2 of U.S. Patent No 4950541, the entirety of which is hereby incorporated by reference.

Ethylene alkyl acrylate or methacrylate copolymers such as FP-3 may be prepared by processes well known to one skilled in the art using either autoclave or tubular reactors. See, e.g., U.S. Pat. Nos. 2,897,183, 3,404,134, 5,028,674, 6,500,888, and 6,518,365. A mixture of two or more different ethylene alkyl acrylate or methacrylate copolymers may be used.

### EXAMPLE 1

Example tie layers were prepared according to the formulations shown in Table 2. Different formulations of PP tie resins were compounded through a 42 mm diameter co-rotating, intermeshing twin-screw extruder. The extruder was configured with 12 barrels (48 L/D). The extruder was equipped with "loss-in-weight feeders." All the raw materials were fed through the main feed port. Nitrogen at 5 SCFH was used to purge first barrel section to maintain an inert atmosphere and minimize oxidation. A six-hole die and four-blades hub were used for underwater pelletization process. Cooling water temp is at 25 °C and water flow rate is at 45 GPM. A run rate of 200 lbs/hr and a screw speed of 250 rpm was used. Barrel 1 was water cooled, Barrels 2-3 were maintained at 50-110 °C, Barrels 4-12 were maintained at 180 °C.

**Table 2: Example Tie Layer Formulations**

| **Ingredient Type** | **SI Unit s** | **CE1** | **CE2** | **CE3** | **IE1** | **IE2** | **IE3** | **IE4** | **IE5** | **IE6** |
|---|---|---|---|---|---|---|---|---|---|---|
| Braskem DS6D21 | wt% | 100 | 42.5 | 60 | 40 | 30 | 30 | 30 | 30 | 30 |
| Braskem 6D20 | wt% | | 42.5 | | 30 | 30 | 30 | 30 | 30 | 30 |
| FP-1 | wt% | | 15 | | 15 | 15 | 15 | 15 | 15 | 15 |
| FP-2 | wt% | | | 15 | | | | | | |
| FP-3 | wt% | | | | 15 | | | | | |
| NUCREL 0411HS | wt% | | | | | 15 | | | | |
| NUCREL 0910 | wt% | | | | | | 15 | | | |
| NUCREL 3990 | wt% | | | | | | | 15 | | |
| ELVALOY AC 1913LG | wt% | | | | | 10 | 10 | 10 | | |
| INFUSE 9500 | wt% | | | 20 | | | | | 20 | |
| NORDEL IP 3720P | wt% | | | | | | | | | 20 |
| LDPE 5004I | wt% | | | | | | | | 5 | 5 |
| Total | | 100 | 100 | 100 | 100 | 100 | 100 | 100 | 100 | 100 |

Extrusion coating trials are performed using a Black-Clawson line following standard coating procedures. In brief, co-extrusion two-layer films are extruded using a the 3-layer extrusion coating (EC) line, using the 2.5 inch (63.5 mm) diameter extruder for random copolymer PP facing the chill roll, and 2.0 inch (50.8 mm) diameter extruder for the tie resin facing the nip roll. The barrel has six heater zones with a temperature profile A1-6 = 160 °C, 210 °C, 235 °C, 255 °C, 285 °C, 290 °C (320 °F, 410 °F, 455 °F, 491 °F, 545 °F, 554 °F). A Nordson EDI 36 inch (914 mm) Autoflex^{™} Die is used, and a 0.5-0.6 mm (0.020") die gap. The line is equipped with a 30 inch (762 mm) chill roll, nip roll, backing roll, and shear slitter.

Co-extruded structure was made with 1 mil of PP (25 microns) and 0.5 mil (12.5 microns) of the tie resin at 554 °F (290 °C), 24-inch (610 mm) die width, 20 mil die gap (0.5 mm), which translates into a coating thickness of 1.5 mils (37.5 microns). The air gap was set at 5.5 inch (154 mm) and samples were collected at 290 ft/min (88 meter/min) with a time-in-the-air-gap (TIAG) around 55 ms. Pre-laminated aluminum foil//PET sheet were dropped onto kraft paper substrate and the coated slip sheets were collected for peel strength testing. The peel strength test was conducted for each sample immediately after production (referred to as "Green Bonding"), after aging for one week at 23 °C (± 2 °C) and 50% (± 10%) relative humidity, and after oven again at 130 to 140 °C for 10 minutes and cooling down to 23 °C. A total of 5 samples were tested for each condition. The results were as shown in Table 3.

**Table 3: Results of the Adhesion Test**

| **Properties** | **SI Units** | **CE1** | **CE2** | **CE3** | **IE1** | **IE2** | **IE3** | **IE4** | **IE 5** | **IE6** |
|---|---|---|---|---|---|---|---|---|---|---|
| Tm | °C | 142 | 139 | 141 | 139 | 139 | 139 | 139 | 140 | 140 |
| MAh% | Wt.% | N/A | 0.15 | 0.18 | 0.13 | 0.14 | 0.14 | 0.14 | 0.14 | 0.14 |
| Oven aging temp* | °C | 140 | 140 | 140 | 140 | 140 | 140 | 140 | 140 | 140 |
| Green Bond | N/ 25 mm | 0.17 | 0.17 | N/A | 0.12 | 0.17 | 0.14 | 0.16 | 0.53 | 0.23 |
| 1-Week Bond | N/ 25 mm | 0.08 | 0.08 | N/A | 0.15 | 0.31 | 0.20 | 0.18 | 0.77 | 0.59 |
| Oven Aged Bond | N/ 25 mm | 0.05 | 0.05 | N/A | 1.32 | 2.94 | 4.05 | 4.29 | 4.42 | 5.98 |

Examples IE1-IE6, which all utilized a propylene-based polymer, a functionalized polypropylene and a modifier, all had an adhesion of greater than 1 Newtons per 25 millimeter (N/ 25 mm) after oven heating at 130- 140 °C for 10 minutes, whereas Examples CE1-CE3 all had an adhesion of less than 1 N/25 mm.

Without being bound by theory, Example IE3, which had a blend of ethylene acid copolymer and ethylene acrylate copolymer, had an adhesion greater than Example IE1, which is a terpolymer of ethylene, methacrylic acid, and butyl acrylate, because it was surprisingly found that blends provided superior adhesion compared to a terpolymer incorporating both the acrylate and the acid in the polymer backbone. Additionally, it is believed that Example IE2 had an adhesion of less than 3 N/ 25 mm because Example IE2 utilized acid copolymer with less than 5 wt.% methacrylic acid, even though the acid copolymer was blended with an ethyl alkyl acrylate.

CE1 was believed to have poor performance because it lacked a functionalized polypropylene and a modifier. CE2 was believed to have poor performance because it lacked a modifier. Example CE3 was not processable. Without being bound by theory, it is believed that CE3 was not processable because the functionalized polyethylene was not compatible with the polypropylene polymer.

The subject matter of the present disclosure has been described in detail and by reference to specific embodiments. It should be understood that any detailed description of a component or feature of an embodiment does not necessarily imply that the component or feature is essential to the particular embodiment or to any other embodiment. Further, it should be apparent to those skilled in the art that various modifications and variations can be made to the described embodiments without departing from the spirit and scope of the claimed subject matter.

It is noted that one or more of the following claims utilize the term "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that where a first component is described as "comprising" a second component, it is contemplated that, in embodiments, the first component "consists" or "consists essentially of" that second component. It should further be understood that where a first component is described as "comprising" a second component, it is contemplated that, in embodiments, the first component comprises at least 10%, at least 20%, at least 30%, at least 40%, at least 50%, at least 60%, at least 70%, at least 80%, at least 90%, at least 95%, or even at least 99% that second component (where % can be weight % or molar %).

It is also noted that recitations herein of "at least one" component, element, etc., should not be used to create an inference that the alternative use of the articles "a" or "an" should be limited to a single component, element, etc.

## Claims

1. A coated substrate comprising a polar layer, at least one polypropylene layer, and at least one tie layer that adheres the polypropylene layer to the polar layer, wherein the tie layer comprises:
at least one propylene-based polymer having a melt flow rate (MFR) (230 °C/ 2.16 kg) of 1.0 to 20.0 dg/min and a melting temperature greater than 130 °C;
functionalized polypropylene having an MFR (160 °C/ 0.325 kg) of 5.0 to 50.0 dg/min , wherein the functionalized polypropylene comprises
a polypropylene grafted with ethylenically unsubstituted dicarboxylic acid; and
a modifier comprising at least one of an olefin block copolymer, an ethylene acid copolymer, an ethylene alkyl acrylate copolymer, and ethylene propylene diene terpolymer.

2. The coated substrate of claim 1, wherein the polar layer comprises aluminum foil, metallized film, paperboard, polyamide, EVOH, PVOH, TPS, TPU, or combinations thereof.

3. The coated substrate of claim 1 or claim 2, wherein the modifier comprises ethylene acid copolymer, the ethylene acid copolymer having an acid comonomer comprising acrylic acid, methacrylic acid, or both.

4. The coated substrate of claim 3, wherein the modifier comprises ethylene acid copolymer and ethylene alkyl acrylate copolymer.

5. The coated substrate of claim 4, wherein the ethylene acid copolymer comprises from 5 to 20 wt.% of the acid comonomer.

6. The coated substrate of any one of claims 1 to 5, wherein the modifier comprises the ethylene alkyl acrylate copolymer, the ethylene alkyl acrylate copolymer having an acrylate comonomer comprising one or more of methyl acrylate, ethyl acrylate, or butyl acrylate.

7. The coated substrate of claim 6, wherein the ethylene alkyl acrylate copolymer comprises from 5 to 25 wt.% of the acrylate comonomer.

8. The coated substrate of any one of claims 1 to 7, wherein the modifier comprises the ethylene propylene diene terpolymer having a Mooney viscosity (ML 1+4, 125 °C) greater than 10 Mooney Units (MU).

9. The coated substrate of any one of claims 1 to 8, wherein the modifier comprises the olefin block copolymer, the olefin block copolymer having a density of 0.860 to 0.900 g/cm³, an MFR(190 °C/ 2.16 kg) of 0.3 to 25.0 dg/min, and a melting temperature of at least 115 °C.

10. The coated substrate of any one of claims 1 to 9, wherein the ethylenically unsubstituted dicarboxylic acid is selected from the group consisting of maleic anhydride, itaconic anhydride, maleic acid diesters, fumaric diesters, maleic acid monoesters or fumaric acid monoesters, esters of C₁ to C₄ alcohols, maleic acid, itaconic acid, fumaric acid, or mixtures thereof.

11. The coated substrate of any one of claims 1 to 10, wherein the ethylenically unsubstituted dicarboxylic acid comprises maleic anhydride.

12. The coated substrate of any one of claims 1 to 12, wherein the tie layer comprises:
from 40 to 90 wt.% propylene-based polymer;
from 5 to 30 wt.% functionalized polypropylene; and
from 5 to 30 wt.% modifier.

13. An article comprising the coated substrate of any one of claims 1 to 13.

14. The article of claim 14, wherein the article comprises packaging, laminate, or paperboard.

15. A composition comprising:
at least one propylene-based polymer having a melt flow rate (MFR) (230 °C/ 2.16 kg) of 1.0 to 20.0 dg/min and a melting temperature greater than 130 °C;
functionalized polypropylene having an MFR (160 °C/ 0.325 kg) of 5.0 to 50.0 dg/min, wherein the functionalized polypropylene comprises a polypropylene grafted with ethylenically unsubstituted dicarboxylic acid; and
a modifier comprising at least one of an olefin block copolymer, an ethylene acid copolymer, an ethylene alkyl acrylate copolymer, and ethylene propylene diene terpolymer.
